Europäisches Patentamt

European Patent Office

Office européen des brevets

(11) Publication number: **0 408 889 A1**

# EUROPEAN PATENT APPLICATION

(21) Application number: **90111074.2**

(22) Date of filing: **12.06.90**

(51) Int. Cl.⁵: **C09D 5/33**, B05D 5/06, G02B 5/128

(30) Priority: **21.07.89 US 384227**

(43) Date of publication of application:
**23.01.91 Bulletin 91/04**

(84) Designated Contracting States:
**AT BE CH DE DK ES FR GB GR IT LI LU NL SE**

(71) Applicant: **FOX VALLEY SYSTEMS, INC.**
**640 Industrial Drive**
**Cary, Illinois 60013(US)**

(72) Inventor: **Smrt, Thomas J.**
**10014 South Grant Highway**
**Marengo, IL 60152(US)**
Inventor: **Mierzwinski, Walter S.**
**1641 Churchill Road**
**Schaumburg, IL 60195(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20 20**
**D-8000 München 86(DE)**

(54) **Aerosol composition and method fo increasing the light-reflectivity of an object.**

(57) An aerosol system for increasing the reflex-reflectivity of a substrate is disclosed. The aerosol system comprises transparent microspheres having a size of at least about 63 microns, a binder resin and a solvent. A method of increasing the reflex-reflectivity of a substrate using such an aerosol system is also disclosed.

EP 0 408 889 A1

# AEROSOL COMPOSITION AND METHOD FOR INCREASING THE LIGHT-REFLECTIVITY OF AN OBJECT

## BACKGROUND OF THE INVENTION

The present invention relates to the field of aerosols, in general, and to aerosol coating compositions, in particular.

The need to increase the night-time or low light visibility of objects, such as signs, has plagued mankind for centuries. For many apparent reasons, the need to read signs, such as highway roadsigns, or to be made aware of certain potentially dangerous conditions, is more critical at night than during daylight hours. Accordingly, reflectorized coatings or surfaces have been developed for the purpose of increasing the night-time or low-light visibility of objects. Such reflectorized surfaces then act to reflect or return incident light, as from an automobile headlight, back generally toward the source of such light.

Unfortunately, the production of reflectorized signs or objects generally has required special processing techniques which are commercially performed only by a limited number of establishments. The costs for such commercially produced objects have been relatively high and essentially prohibitive when only a limited quantity of specialized signs or the like are desired.

A need therefore has existed for a means to render common objects, such as signs, reflective, without great expense. U.S. Patent No. 2,354,018 is directed toward what was believed to be one possible solution to such a need. In that patent there is disclosed a light reflectorized beaded sheet material, designed to be adhesively affixed to objects, including pre-existing signs, and the like. However, the sheet material incorporates either a pigmented sizing film or a reflector sizing coat in the sheet material which then obscures any underlying printing or the like on the substrate, requiring then careful cutting of lettering into or from the sheet material, to construct any desired sign. That solution is not believed to have found acceptance, perhaps due to the inability to form weather-resistant adhesive bonds to the underlying substrate, or perhaps due to the cumbersome need to carefully cut the material into the desired shapes and patterns. More likely, the lack of convenience of such an approach has been responsible for its lack of acceptance.

Another factor of concern in this field is the ability to quickly increase the night or low-light visibility of an object, as may be necessary in an emergency situation. In the past, emergency situations, such as the need to warn of a stalled car or other object on or near a highway, have been addressed by placing mobile, reflectorized objects near the obstruction. Such an approach is unsatisfactory, however, because it does not highlight the obstruction itself and in fact tends to attract a driver's attention to the reflectorized object and away from the obstruction of concern.

It is clear that a need also has existed for a means to increase the night-time or low light visibility of an object in a reasonably rapid manner, without distracting an observer's attention away from the object itself. U.S. Patent No. 3,099,637 is concerned with certain compositions which evidently were believed to be useful for converting ordinary reflective surfaces into reflex-reflecting ones. The compositions contain glass beads having diameters preferably between about 15 and 60 microns and are said to be sprayable. No mention is made of application of such compositions via aerosol means.

The compositions of the '637 patent have not found general acceptance, perhaps at least in part due to the lack of an easy means to apply the same. The patent suggests application by means of classical brushing technique, which is cumbersome and not readily applicable in emergency situations. Further, it is difficult to achieve, through brushing, a thin, uniform surface layer which will not be readily noticed in daylight or normal ambient light conditions.

Others also have suggested the application of various types of glass beads, for purposes of increasing visibility of objects or areas. For example, U.S. Patent No. 2,574,971 concerns certain highway marking paint which contains glass beads. The paint is said to be sprayable, assumedly through the use of typical spray gun technology, due to its early date (1951). RE 30,892 is concerned with a composition used to retro-reflectively treat fabrics, the composition including transparent microspheres and specular reflective means underlying the microspheres to make the microspheres retro-reflective. As a general principle, for nonaerosol applications of glass beads, those skilled in that art have recognized that larger glass beads afford better reflectivity than smaller glass beads.

Aerosol means of application of certain small-sized glass beads has been suggested in the art. In U.S. Patent No. 2,963,378, there is suggested the use of glass beads having an optimum size, in accordance with that reference, of 10 to 50 microns in diameter for certain formulations which include aerosols. The beads are reflectorized by a metallic coating over approximately one-half of their surface. The formulations are purportedly for use in providing coatings for highway signs and markers that have long-range visibility when viewed at night.

U.S. Patent No. 3,228,897 relates to certain coating compositions containing glass beads which are stated to be capable of application by various techniques, including spray methods. The patent contains one example of a composition indicated to be of use in an aerosol container, although no actual example of an aerosol formulation is present. The beads are indicated to have a particle size of about 25 to about 75 microns, but only glass beads having particle sizes in the 20-45 micron size range are actually used in the working examples. Further, the beads are applied in combination with a reflective metallic pigment which acts to form reflective back surfaces for the glass beads.

Despite the fact that glass bead aerosol formulations are suggested in the foregoing references which have been in existence for decades, no actual commercial use of such formulations is known.

Of more recent era, U.S. Patent No. 4,329,393 discusses the use of hemispherically coated glass beads having a particle size in the range of 10 to 60 microns, but with a particle size of 10 to 50 microns for aerosol application, for the purpose of speeding recognition of the location of certain microparticles or taggants on a labeled object. The beads are used to reflectorize and thus highlight the location of the microtaggants, upon being illuminated with an incident beam of light.

It is clear that the apparent cumulative teaching of the foregoing prior art is that aerosol formulations containing glass beads with a particle size of about 10 to about 60 microns, preferably about 10 or 20 to about 45 microns, can be used in aerosol coating compositions to reflectorize a substrate. Also in accordance with the art, the beads should have some metallic reflector in back of or coated onto such particles. However, the fact remains that even though much of the art in this area has been in existence for decades, no such compositions are believed to have found commercial acceptance and none are believed to be currently commercially available.

The present invention is directed toward the still unsatisfied need for a convenient and speedy means for increasing the reflectivity of an object or substrate, such as an aerosol composition.


## SUMMARY OF THE INVENTION

Quite surprisingly, an aerosol composition has been discovered which dramatically increases the light reflectivity of a substrate or object to which it is applied. In contradistinction with the prior art, however, the transparent microspheres used in the present invention have larger particle sizes. In particular, the transparent microspheres employed in accordance with the present invention have particle sizes of at least about 63 microns and preferably are much larger.

A particularly surprising aspect of the present invention is the finding that the larger size microspheres provide for significantly improved reflectivity of the resultant coated substrate, in comparison with the smaller microspheres used in the aerosol formulations of the prior art.

The present invention provides both novel aerosol compositions as well as a method for increasing the reflectivity of an object or substrate, by application of such a novel aerosol composition thereto.


## DETAILED DESCRIPTION OF THE PREFERRED EMBODIMENTS

In accordance with the present invention, there is provided an aerosol system for increasing the reflex-reflectivity of a substrate, comprising a self-pressurized, aerosol dispenser means; a coating composition; and a propellant, said coating composition comprising transparent microspheres having a particle size of at least about 63 microns; a binder resin capable of adhering said microspheres to a substrate, upon application thereto; and a solvent in which the binder resin is dissolved.

The present invention also provides a method for increasing the reflex-reflectivity of a substrate, comprising coating said substrate with a composition comprising transparent microspheres having a particle size of at least about 63 microns; a binder resin capable of adhering said microspheres to the substrate, upon application thereto; and a solvent in which the binder resin is dissolved, said substrate being coated by dispensing said composition from a self-pressurized aerosol means, the transparent microspheres exhibiting reflex-reflectivity after application to the substrate.

As used in the present application, the term "reflex-reflectivity" includes the optical phenomena in which an incident beam of light is reflected back toward its source in the form of a cone having a small angle to the original incident ray of light. Such reflex-reflectivity allows an observer at a small angle from the line of incident light to still be within the cone of reflected light which is of relatively high intensity. For purposes of the present application, however, the actual shape of the reflected light is not critical and the term also is meant to encompass what some call retro-reflective which usually denotes an optical phenomenon in which the incident light beam is returned substantially along its original line of travel.

The transparent microspheres of use in the present invention are all generally spherical particles which are substantially transparent, exhibit the reflex-reflectivity as discussed above, and are of the appropriate size range. The chemical composition of the microsphere itself is not critical and may include compositions of the type used heretofore in the art, such as those previously referred to as "glass beads", so long as the aforementioned properties and size limits are satisfied.

The microspheres should have an index of refraction of at least about 1.5. Generally the microspheres will have an index of refraction between about 1.5 and about 2.8 and typically from about 1.9 to about 2.1 As a general principle, the higher the index of refraction of the microspheres, the better the reflectivity of the composition.

As used herein the terms aerosol means and self-pressurized aerosol and aerosol dispensing means are interchangeable and are meant to refer to any art-recognized, self-pressurized container which employs an internal propellant for the purpose of dispensing a component therefrom, via an integral valve and actuator system.

Further, to provide a coating exhibiting high reflex-reflection under a variety of conditions, a composition having a mixture of microspheres (e.g., 1.9 index microspheres, 2.5 index microspheres and 2.8 index microspheres), may be desirable. Although transparent microspheres preferably are used which have a very high index of refraction, cost considerations may make the use of such beads prohibitive. Thus, less expensive microspheres made of cheaper articles and having lower indices of refraction may be preferable in some instances due to economic reasons.

Transparent microspheres are available commercially only in ranges of sizes, depending upon the screening protocol of an individual manufacturer. Although it is desirable to use microspheres with particle sizes of at least about 63 microns, and preferably larger than 75 microns, it is not commercially possible to obtain a transparent microsphere supply having such definitive lower limits. For example, one typical supplier of transparent microspheres has available a size-range of microspheres from about 63 to about 88 microns. The presence of smaller miocrospheres does not detract from the operability of the present invention, but better performance is achieved when the larger microspheres are employed. The larger the microsphere the better the performance. The only limitation on the upper size of the microspheres relates to the particular aerosol means for dispensing the product. Aerosol valves and actuators are capable of spraying particulate matter up to given size ranges. For the smaller microspheres in the range of 63-88 microns, many valves and actuators work. For larger microspheres one needs to be somewhat more selective in the choice of valve and actuator. Thus, the upper size of the microspheres generally is a functional one. The microspheres need to be small enough to be sprayable from the self-pressurized aerosol means employed.

The present invention may also employ the reflective glass beads such as those described in U.S. Pat. No. 2,963,378. Each bead is a tiny glass sphere or spheroid which is transparent and reflectorized over approximately half its area, conveniently with a thin metallic reflector coating, such as a coating of aluminum, forming an integral hemispherical reflector cap. The use of such reflectorized beads, however, is not necessary to achieve operable performance in accordance with the present invention. Nor is it necessary to employ separate reflective metallic pigments or other materials to form reflective back coatings, as is done in U. S. Patent No. 3,228,897.

The quantity of microspheres employed in the compositions used in the present invention may vary over some range. As a general principle, the amount of microspheres should be such that after application to a substrate, and evaporation of any volatile solvent, the microspheres remain adhered to the substrate via the binder resin.

Generally, a composition of use in the present invention will have about 1 to about 99 percent transparent microspheres based upon the total weight of microspheres, binder resin and solvent. Typically, the composition will have about 20 to about 80 percent transparent microspheres and most typically about 65 percent microspheres all on the foregoing weight basis.

The type of binder resin used in the method and composition of the present invention is not critical so long as it provides a substantially transparent coating and is sufficiently adherent to securely attach the microspheres to a surface. The coating should be transparent in order to allow light beams to be focused on, and reflected by, the transparent microspheres. A transparent and colorless binder is also desirable in order to render the coating substantially indescernable under normal viewing conditions. It is understood, however, that for some applications colored compositions may be desirable.

The binder resin should have a relatively low index of refraction. The difference between the index of refraction of the binder resin and the index of refraction of the glass beads significantly affects the degree of reflectivity achieved with any composition. Binder resins generally will have an index of refraction of about 1.4 to about 1.8, and typically will have an index of refraction from about 1.45 to about 1.55. Most of the binder resins will have an index of refraction of about 1.47.

Some examples of resin systems which will form suitable transparent coatings include acrylate polymers and copolymers, polyurethanes, polyamide-modified alkyds, polyesters, ethylene vinyl acetate copolymers, and epoxies. Selection of a resin system will depend, in part, upon the type of surface coated. The preferred binder resins are acrylics.

The difference between the index of refraction of the binder resin and the microspheres generally is about 0 to about 1.5, and typically will be about 0.3 to about 0.7. Most formulations of the present invention will have a differential of about 0.43.

Optimum binder resin concentration will vary depending on the particular resin system. In general, binder concentrations below about 0.1 percent produce a dried coating which is too thin to hold the microspheres on the surface. The maximum binder concentration usually is about 99 percent, all percentages being expressed in terms of the total weight of the microspheres, binder resin, and solvent. On a dry weight basis, the resin is preferably 0.1 to 99 percent of the total composition, the remainder being the microspheres.

The solvent employed in the present invention is not critical. Virtually any solvent which will dissolve the binder resin without dissolving the microspheres will be suitable. Examples of suitable solvents include aliphatic and aromatic solvents, ketones, esters, glycolethers, alcohols, halogenated hydrocarbons, and water.

Any suitable propellant for use in an aerosol may be used in accordance with the present invention. Thus, the typical liquefied propellants and compressed gases normally used in aerosol applications are suitable. Certain hydrocarbon propellants such as propane and butane and mixtures thereof are usually employed. The vapor pressure of the propellant system should be at least 13 pounds per square inch gauge (p.s.i.g.) at 70° F. Pressures up to 180 p.s.i.g. at 130° F. may safely be used with metal containers and up to 40 p.s.i.g. at 70° F. with specifically reinforced glass containers.

The compositions may also embody certain additional agents such as pigments, dyes or the like, if a colored coating formulation is desired. If so employed preferable pigments and dyes include transparent or semitransparent dyes and pigments.

Other ingredients optionally incorporated into the compositions of the invention include suspending aids or other additives to enhance the invention. Another such additive may be a coating aid to assist in immobilizing the microspheres after application to a surface. Typical additives for such purposes are clays and modified clays such as bentonite and the like.

The aerosol containers of use in accordance with the present invention may be of any generally recognized construction. Valves and actuators known in the aerosol industry for use in dispensing powders are of particular utility in the present invention. The PARC-39 valve manufactured by Seaquist and the SV-78 valve manufactured by Summit have been found to be of utility in the present invention. Similarly, the EXCEL-100, No. 0405-03490-30 actuator has been found to be of particular utility in the practice of the present invention when the aforementioned Seaquist valve is employed. When the Summit SV-78 valve is employed, the standard Summit 0.023" actuator may be employed.

The following is an example of a typical composition of the invention for application by aerosol spraying: (amounts are given in parts by weight)

| General | | Most Preferred |
|---------|-------|----------------|
| 1-75% | 18.3% | Rohm & Haas Acryloid B-67 (45% isobutylmethacrylate polymer in VM&P naphtha) |
| 1-90% | 56.5% | Transparent microspheres 63-105 microns |
| 1-5% | 0.7% | Solvent 150 (Mixture of hydrocarbons) |
| 1-5% | 0.4% | Bentone SD1 (modified clay) |
| 1-85% | 11.1% | Toluene |
| 3-50% | 13.1% | A-70 Propellant (propane and butane blend with a 70 psig pressure at 70° F.) |

A suitable aerosol valve system for applying the above composition to the surface of an object is described as follows:

5

Valve: Seaquist PARC-39 (0.025" stem orifice, 0.020" vapor tap)
Actuator: Seaquist EXCEL-100, No. 0405-03490-30

The compositions and method in accordance with the present invention will now be described. It should be understood, however, that the examples are not intended to delineate the scope of the invention nor to limit the appended claims. In the examples which follow, the composition and method described above were employed. In the examples, the quantities of material are expressed in terms of percentages by weight of the total composition, unless otherwise specified.

## EXAMPLES 1-3 AND COMPARATIVE EXAMPLES A AND B

Five formulations were prepared using the following method of preparation, the only difference being the size of the microspheres which were employed.

Rohm & Haas Acryloid B-67 isobutylmethacrylate polymer as a 45% solution in VM&P naphtha is combined with Solvent 150 mixed hydrocarbons and NL Industries Bentone SD-1 modified clay and dispersed via high speed mixing for 15 minutes. Toluene is then added to form a spray base. A 211 x 604 can is filled with 140 grams of spray base, 260 grams of transparent microspheres and 60 grams of A-70 propellant (propane and butane blend). The final spray composition contains 18.7% Rohm & Haas Acryloid B-67, 56.5% microspheres, 0.7% Solvent 150, 0.4% Bentone SD1, 11.1% Toluene, and 13.1% propellant.

The microspheres used in these experiments all had the same index of refraction (1.9) and had the following sizes:

| Example No. | Size (microns) |
|---|---|
| A | 37-44 |
| B | 44-63 |
| 1 | 63-88 |
| 2 | 74-105 |
| 3 | 88-125 |

The ability of each of the foregoing compositions to reflect light was determined in order to establish a relationship between the size of the bead used in the formulation and the reflectivity of the coating resulting from application of the formulations to a substrate by use of the following procedure.

An apparatus was constructed to allow measurement of the amount of light reflected from a 5 inch x 8 inch portion of test panels coated with beads of various sizes. Each panel consisted of a steel substrate painted gloss white. Product of otherwise identical composition was then sprayed on the panels, the only difference between the panels being the size of the microspheres used in the product formulation.

The light source used for the test was a Kodak "Carousel 600H" slide projector with a 4 inch f:3.5 lens located inside a black box. The front of its lens was placed 9 inches from a 2 inch diameter hole in the black box.

Reflected light was measured with a Cole-Parmer Model LX-101 lux meter. The meter's sensor was mounted on the front of the black box directly above the opening for the light source. The box and test panel were so arranged that the distance from the light source to the panel was 6 feet, the distance from the panel to the meter was 5 feet 3 inches. The results obtained are as follows:

| Example | Microsphere Size | Reflected Light |
|---|---|---|
| 3 | 88-125 micron (170-120 mesh) | 57 lux* |
| 2 | 74-105 micron (200-140 mesh) | 55 lux |
| 1 | 63-88 micron (230-170 mesh) | 52 lux |
| B | 44-63 micron (325-230 mesh) | 43 lux |
| A | 37-44 micron (400-325 mesh) | 41 lux |

* 1 lux = 0.0929 foot-candle or 1 lumen.square meter

Subjectively, the concensus of those actually observing the foregoing comparative study was that the visually experienced differences between the reflex-reflectivity of the various size ranges were far more apparent than the numerical difference would seem to suggest.

The above results were all obtained using microspheres with an index of refraction of 1.9 in a resin with an index of refraction of 1.472. When 74-105 micron (200-140 mesh) microspheres with an index of refraction of 1.5 were tested, a result of 17 lux was obtained. Repetition of the test procedure results in somewhat different numerical values, depending upon actual test conditions and the like. Although absolute values vary, the relationships between the values remain the same.

The foregoing results indicate (a) that reflex-reflectivity increases as the microsphere sizes increase, (b) that microspheres smaller than 63-88 microns are substantially less reflex-reflective than microspheres of equal or greater size, and (c) that the degree of reflex-reflectivity varies directly with the difference in indices of refraction of the microspheres relative to the resin.

## EXAMPLE 4

This example demonstrates a commercial-scale procedure for manufacturing the compositions of and for use in the present invention.

There is combined 438 pounds (60.00 gallons) of Rohm & Haas Acryloid B-67 resin (isobutylmethacrylate polymer) as a 45% solution in VM&P naphtha with 15 pounds (2.00 gallons) of Solvent 150 mixed hydrocarbons and 12 pounds (0.98 gallons) N L Industries Bentone SD-1 modified clay. The mixture is dispersed via high speed mixing for 15 minutes, then 268 pounds (37.00 gallons) of toluene is added to yield 733 pounds (99.98 gallons) of spray base.

A 211 x 604 can is filled with 140 grams of spray base, 260 grams of microspheres and 60 grams A-70 propellant (propane and butane blend).

## Claims

1. An aerosol system for increasing the reflex-reflectivity of a substrate, comprising a self-pressurized, aerosol dispenser means; a coating composition; and a propellant, said coating composition comprising transparent microspheres having a particle size of at least about 63 microns; a binder resin capable of adhering said microspheres to a substrate, upon application thereto; and a solvent in which the binder resin is dissolved, the microspheres exhibiting reflex-reflectivity after application to a substrate.

2. The aerosol system of claim 1 wherein the microspheres have an index of refraction of at least about 1.5.

3. The aerosol system of claim 1 wherein the microspheres have an index of refraction between about 1.5 and about 2.8.

4. The aerosol system of claim 3 wherein the microspheres have an index of refraction between about 1.9 and about 2.1.

5. The aerosol system of claim 2 wherein the quantity of microspheres, based upon the total weight of microspheres, binder resin, and solvent is from about 1 to about 99 percent.

6. The aerosol system of claim 4 wherein the quantity of microspheres, based upon the total weight of microspheres, binder resin, and solvent is from about 20 to about 80 percent.

7. The aerosol system of claim 5 wherein the binder resin has an index of refraction from about 1.4 to about 1.8.

8. The aerosol system of claim 6 wherein the binder resin has an index of refraction from about 1.45 to about 1.55.

9. The aerosol system of claim 1 wherein the difference between the index of refraction of the binder resin and the microspheres is from about 0 to about 1.5.

10. The aerosol system of claim 8 wherein the difference between the index of refraction of the binder resin and the microspheres is from about 0.3 to about 0.7.

11. The aerosol system of claim 10 also comprising a suspending aid.

12. The aerosol system of claim 11 wherein the suspending aid is selected from the group consisting of clays and modified clays.

13. A method for increasing the reflex-reflectivity of a substrate, comprising coating said substrate with a composition comprising substantially transparent microspheres having a particle size of at least about 63 microns; a binder resin capable of adhering said microspheres to the substrate, upon application thereto; and a solvent in which the binder resin is dissolved, said substrate being coated by dispensing said composition from a self- pressurized aerosol means; the microspheres exhibiting reflex-reflectivity after application to the substrate.

14. The method of claim 13 wherein the microspheres have an index of refraction of at least about 1.5.

15. The method of claim 13 wherein the microspheres have an index of refraction between about 1.5 and about 2.8.

16. The method of claim 15 wherein the microspheres have an index of refraction between about 1.9 and about 2.1.

17. The method of claim 14 wherein the quantity of microspheres, based upon the total weight of microspheres, binder resin, and solvent is from about 1 to about 99 percent.

18. The method of claim 16 wherein the quantity of microspheres, based upon the total weight of microspheres, binder resin, and solvent is from about 20 to about 80 percent.

19. The method of claim 17 wherein the binder resin has an index of refraction from about 1.4 to about 1.8.

20. The method of claim 18 wherein the binder resin has an index of refraction from about 1.45 to about 1.55.

21. The method of claim 13 wherein the difference between the index of refraction of the binder resin and the microspheres is from about 0 to about 1.5.

22. The method of claim 20 wherein the difference between the index of refraction of the binder resin and the microspheres is from about 0.3 to about 0.7.

23. The method of claim 22 also comprising a suspending aid.

24. The method of claim 23 wherein the suspending aid is selected from the group consisting of clays and modified clays.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | <u>US - A - 4 329 393</u><br>(LAPERRE et al.)<br>   * Claims 1,6,8,10-13,16;<br>     column 5, line 65 - column 6,<br>     line 36 *<br>     -- | 1-6,11<br>-16,<br>23,24 | C 09 D 5/33<br>B 05 D 5/06<br>G 02 B 5/128 |
| A | <u>US - A - 4 263 345</u><br>(BINGHAM)<br>   * Claim 1; column 5, lines<br>     4-49 *<br>     -- | 1-5,13<br>-16 | |
| A | <u>EP - A2 - 0 305 074</u><br>(MINNESOTA MINING AND MANU-<br>FACTURING COMP.)<br>   * Claims 1,7,8,11; page 6,<br>     lines 42-43 *<br>     -- | 1-4,<br>11,13-<br>16,23 | |
| D,A | <u>US - A - 3 228 897</u><br>(NELLESSEN)<br>   * Claim 1; examples *<br>     -- | 1-6,11<br>-18,<br>23,24 | |
| A | <u>US - A - 3 535 019</u><br>(LONGLET et al.)<br>   * Claim 1; examples; column<br>     2, lines 52-57 *<br>     -- | 1-6,13<br>-18 | TECHNICAL FIELDS SEARCHED (Int. Cl.5)<br><br>B 05 D 5/00<br>C 09 D 5/00<br>C 08 K 3/00<br>G 02 B 5/00 |
| A | <u>DE - A1 - 3 444 595</u><br>(MÖNCH KUNSTSTOFFTECHNIK<br>GMBH)<br>   * Claims 1-3; page 6, lines<br>     20-29 *<br>     ---- | 1 | |

The present search report has been drawn up for all claims

| Place of search | Date of completion of the search | Examiner |
|---|---|---|
| VIENNA | 18-10-1990 | PUSTERER |

EPO FORM 1503 03.82 (P0401)